# EUROPÄISCHE PATENTSCHRIFT

(11) **EP 1 925 518 B1**
(45) Veröffentlichungstag und Bekanntmachung des Hinweises auf die Patenterteilung: **28.07.2010**
(21) Anmeldenummer: 07015849.8
(22) Anmeldetag: 11.08.2007
(51) Int. Cl.: B60T 17/02

(54) **Verfahren zur Druckluftversorgung in einem Fahrzeug**
Method for compressed air supply in a vehicle
Procédé destiné à l'alimentation en air comprimé dans un véhicule

(30) Priorität: 22.11.2006 DE 102006054813
(43) Veröffentlichungstag der Anmeldung: 28.05.2008
(73) Patentinhaber: WABCO GmbH, 30432 Hannover (DE)
(72) Erfinder: Kleen, Berend, 30161 Hannover (DE); Lentz, Uwe, 31535 Neustadt (DE); Zimpel, Dieter, 31535 Neustadt (DE)

(56) Entgegenhaltungen:
- EP-A- 1 508 488
- EP-A- 1 561 613
- EP-B- 0 943 468
- EP-B- 1 256 466
- DE-A1- 10 055 108
- US-A1- 2004 260 441

## Beschreibung

Die Erfindung betrifft ein Verfahren zur Druckluftversorgung in einem Fahrzeug.

In Nutzfahrzeugen werden die einzelnen Druckluftverbraucher, z. B. die Luftfedern zur pneumatischen Niveau-Regulierung und die pneumatischen Bremsen, von einem zentralen Kompressor mit Druckluft versorgt.

Hierbei sind in modernen Nutzfahrzeugen z. T. intelligente Druckluftversorgungseinheiten vorgesehen, die im Allgemeinen über den fahrzeuginternen CAN-Bus mit anderen Steuergeräten verbunden sind. Somit können die Steuergeräte der Luftverbraucher über eine genormte CAN-Botschaft von der Steuereinrichtung des Kompressors Druckluft anfordern. Hierzu wird über das als CAN-Botschaft ausgebildete Anfragesignal ein vorgegebener Druck angefordert. Die Steuereinrichtung der zur Niveau-Regulierung vorgesehenen Luftfedern nutzt dies bei modernen Nutzfahrzeugen oftmals und fordert bei Erkennen einer Regelfunktion mit erhöhtem Druckluftbedarf somit Druckluft an, woraufhin der Kompressor das geförderte Luftvolumen erhöht.

Es ergibt sich jedoch immer noch ein hoher Druckluftverbrauch aufgrund eines z. T. nicht erforderlichen Betriebes des Kompressors, woraus wiederum ein entsprechender Kraftstoffverbrauch resultiert.

Die Druckschrift DE10055108A1 beschreibt eine Luftfederung für ein Fahrzeug mit mindestens einer Luftfeder pro Rad an mindestens einer Fahrzeugachse, einer Pumpe, mindestens einem Speicherbehälter und einer diese Aggregate verbindenden Schaltung, wobei die Druckseite der Pumpe mit dem Speicher oder den Luftfedern verbunden ist. Die Förderung von Druckluft aus dem Speicher in die Luftfedern oder umgekehrt kann ohne einen Betrieb der Pumpe oder mit Betrieb der Pumpe erfolgen. Dies hängt von den Druckverhältnissen in dem Speicher bzw. in den Luftfedern ab. Ist beispielsweise der Luftdruck im Speicher zu gering für einen vom Steuergerät vorausberechneten Regelvorgang oder ist der Druck in den Luftfedern höher als im Speicherbehälter, dann schaltet die Steuerung die Pumpe zu und fördert aus dem Speicherbehälter angesaugte Luft in die Luftfedern.

Die Druckschrift US2004/260441A1 beschreibt ein Verfahren zur Steuerung eines Kompressors, der durch den Motors eines Fahrzeuges angetrieben wird und mindestens einen Druckluftspeicher speist, wobei der Kompressor in Abhängigkeit vom Vergleich des Druckwerts in dem oder in den Speichern mit vorbestimmten Einschaltdruckschaltschwellwerten und Abschaltdruckschwellwerten, die vom Vorzeichen des Motordrehmoments abhängig sind aktiviert oder deaktiviert wird. Im Bereich eines positiven Motordrehmoments werden die Einschaltdruckschwellwerte und/oder Abschaltdruckschwellwerte geschwindigkeitsabhängig bestimmt. Im Stillstand des Fahrzeuges oder bei niedriger Fahrzeuggeschwindigkeit werden höhere Druckschwellwerte bestimmt bzw. zugelassen als bei höheren Fahrzeuggeschwindigkeiten.

Der Erfindung liegt die Aufgabe zu Grunde, gegenüber herkömmlichen Verfahren zur Druckluftversorgung einen geringeren bzw. effizienteren Kompressorbetrieb zu ermöglichen.

Diese Aufgabe wird durch ein Verfahren nach Anspruch 1 gelöst. Die Unteransprüche beschreiben bevorzugte Weiterbildungen.

Erfindungsgemäß wird somit von der Niveauregulierungs-Steuereinrichtung nicht pauschal ein erhöhter Luftdruckbedarf gemeldet bzw. ein höheres Druckluftvolumen angefordert, sondern zunächst aus aktuellen Druckwerten und ggf. durchzuführenden zusätzlichen Funktionen ein jeweiliger erforderlicher Druckwert berechnet, der nachfolgend angefordert werden kann. Die Anforderung des Druckwertes erfolgt vorzugsweise über ein als CAN-Botschaft ausgebildetes Anfragesignal.

Somit ist erfindungsgemäß nicht lediglich die Druckluftmenge, sondern auch der erforderliche Druckwert relevant. Falls ermittelt wird, dass zwar für jeweils durchzuführende Funktionen ein erhöhtes Druckluftvolumen bzw. ein erhöhter Druckluftdurchsatz erforderlich ist, jedoch kein höherer Druckwert, kann dies jeweils berücksichtigt werden und kein Anfragesignal bzw. ein entsprechend ausgebildetes Anfragesignal unter Angabe des erforderlichen Druckwertes ausgesandt werden.

Erfindungsgemäß kann der Kompressor somit bedarfsgerecht gesteuert werden, indem nicht für jeweils durchzuführende Funktionen pauschal eine Kompressorbetätigung angefordert wird, die zunächst zu einer Erhöhung des Druckwertes führt. Somit kann erfindungsgemäß der Treibstoffverbrauch verringert bzw. eine effektivere Nutzung der Druckluft des Kompressors erreicht werden.

Das erfindungsgemäße Verfahren ist insbesondere in Nutzfahrzeugen einsetzbar; weiterhin kann es auch z. B. bei PKW mit Luftfederung eingesetzt werden.

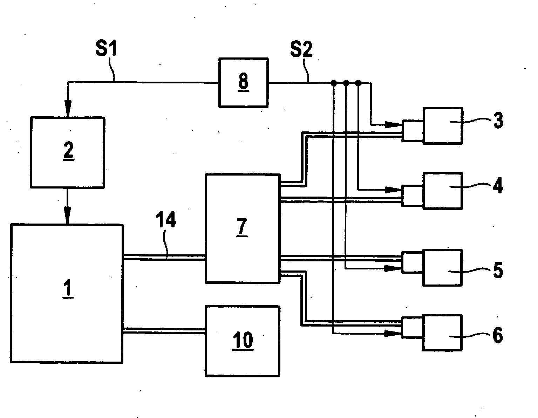

Die Erfindung wird im Folgenden anhand der beiliegenden Zeichnung an einer Ausführungsform näher erläutert. Die Figur zeigt ein Blockdiagramm eines erfindungsgemäßen Systems zur Druckluftversorgung in einem Nutzfahrzeug.

In einem - beispielhaft zweiachsigen - Nutzfahrzeug ist ein zentraler Kompressor 1 vorgesehen, der von einer Steuereinrichtung 2 gesteuert wird und unter anderem zur Druckluftversorgung einer Niveauregelung und eines ABS-Bremssystems dient. Hierbei ist in dem Niveauregelsystem ein Luftvorrat 7 als Zwischenspeicher für die vier Luftfedern (Luftbälge) 3, 4, 5, 6 der vier Räder der vorderen und der hinteren Achse vorgesehen, wobei eine der Niveauregelung dienende Steuereinrichtung 8 den Druckluftbedarf für die vier Luftfedern 3, 4, 5 und 6 ermittelt und nach der ECAS-Norm über den fahrzeuginternen CAN-Bus ein Anfragesignal S1 an die Steuereinrichtung 2 des Kompressors 1 ausgibt und hierdurch Druckluft über eine Druckluftleitung 14 für den Luftvorrat 7 anfordert. Weiterhin steuert die Steuereinrichtung 8 über Steuersignale S2 die Ein- und Auslassventile der Luftfedern 3, 4, 5 und 6 an.

Weiterhin ist unter anderem das Bremssystem an die Druckluftversorgung des Kompressors 1 angeschlossen, wobei eine nicht gezeigte ABS-Steuereinrichtung über den CAN-BUS Anfragesignale an die Steuereinrichtung 2 ausgibt und hierdurch von dem Kompressor 1 Druckluft für einen ABS-Luftvorrat 10 anfordert.

Die Steuereinrichtung 8 ermittelt insbesondere bei folgenden Regelfunktionen mit erhöhtem Druckluftbedarf, ob Druckluft anzufordern ist:
- Anfahrhilferegelungen, bei denen z. B. eine Achse angehoben wird, damit eine andere Achse mehr Traktion hat,
- Heben-Vorgänge zur Niveauerhöhung,
- Veränderung der Liftachsposition, um bei leerem Fahrzeug eine Achsposition zu entlasten,
- Kneeling-Vorgänge in Bussen zur Absenkung einer Seite oder des vorderen Bereichs, um einen Einstieg zu erleichtern.

Die Berechnung und Aktivierung berücksichtigt hierbei die Art der Regelfunktionen.

Falls Heben-Vorgänge und/oder Veränderungen der Liftachsposition durchzuführen sind, wird von der Steuereinrichtung 8 ein entsprechendes Luftvolumen erkannt, jedoch auch festgestellt, dass hierfür im allgemeinen noch nicht ein erhöhter Druck erforderlich ist; erst bei Vorliegen weiter Belastungen wird somit ein erhöhter erforderlicher Druckwert erkannt. Somit wird kein Anfragesignal S1 ausgegeben oder über das Anfragesignal S1 ggf. ein entsprechendes Luftvolumen mitgeteilt, ohne einen höheren Druckwert anzufordern. Falls das zu erwartende höhere Luftvolumen im üblichen Bereich liegt, ist somit gegebenenfalls kein Anfragesignal S1 erforderlich, da das betreffende Luftvolumen kurzfristig vom Kompressor über die Druckluftleitung 14 zur Verfügung gestellt werden kann.

Für Anfahrhilfevorgänge ist in der Regel ein erhöhter Druck erforderlich, um die höheren Achslasten abzustützen. Die Steuereinrichtung 8 ermittelt erfindungsgemäß somit, ob bei einer Anfahrhilferegelung ein erhöhter Druck erforderlich ist, um die höheren Achslasten abzustützen. Falls hieraus ein Bedarf an einem höheren Druckwert ermittelt wird, wird dieser über das Anfragesignal S1 an die Steuereinrichtung 2 ausgegeben, damit der Kompressor 1 über die Druckluftleitung 14 nicht nur ein entsprechendes Luftvolumen, sondern auch einen erhöhten Druck zur Verfügung stellt. Auch bei einem anstehenden automatischen Nachregeln mit Heben-Vorgängen ist in der Regel ein erhöhter Druckwert anzufordern.

Bei Ermittlung eines höheren Druckwertes für die Regelfunktionen wird von der Steuereinrichtung 8 der aktuelle höchste Luftdruck bzw. Balgdruck der Luftfedern 3, 4, 5, 6, d. h. der maximale Wert der einzelnen aktuellen Balgdrücke, genommen und ein Zuschlag hinzu addiert. Der Zuschlag kann aus den aktuellen Bedingungen ermittelt werden und berücksichtigt den zu erwartenden höheren Druckwert. Hierbei kann der Zuschlag z. B. für die jeweiligen zusätzlichen Regelfunktionen pauschalisiert vorgesehen sein, oder auch in Abhängigkeit von den jeweils aktuell angeforderten zusätzlichen Funktionen bzw. Regelfunktionen ermittelt werden.

## Patentansprüche

1. Verfahren zur Druckluftversorgung in einem Fahrzeug, bei dem mindestens eine Niveauregulierungs-Steuereinrichtung (8) eines pneumatischen Niveauregulierungssystems mit mehreren Luftfedern (3, 4, 5, 6) einen Druckluftbedarf ermittelt und ein Anfragesignal (S1) an eine Steuereinrichtung (2) eines Kompressors (1) ausgibt und die Steuereinrichtung (2) in Abhängigkeit des Anfragesignals (S1) den Kompressor (1) zur Ausgabe von Druckluft ansteuert, wobei
die Niveauregulierungs-Steuereinrichtung (8) einen erforderlichen Luftdruckwert in Abhängigkeit von durchzuführenden Funktionen ermittelt und
die Niveauregulierungs-Steuereinrichtung (8) in dem Anfragesignal (S1) den erforderlichen Luftdruckwert mitteilt, wobei die Niveauregulierungs-Steuereinrichtung (8) zur Ermittlung des erforderlichen Luftdruckwertes aktuelle Luftdruckwerte der Luftfedern (3, 4, 5, 6) heranzieht,
**dadurch gekennzeichnet, dass**
die Niveauregulierungs-Steuereinrichtung (8) den erforderlichen Luftdruckwert aus dem aktuell höchsten Luftdruckwert der Luftfedern (3, 4, 5, 6) und einem additiven Zuschlagswert berechnet.

2. Verfahren nach Anspruch 1, **dadurch gekennzeichnet, dass** der additive Zuschlagswert ein für jede durchzuführende Funktion vorgegebener Wert ist.

3. Verfahren nach Anspruch 1, **dadurch gekennzeichnet, dass** der additive Zuschlagswert von der Niveauregulierungs- Steuereinrichtung (8) aktuell in Abhängigkeit der durchzuführenden Funktion ermittelt wird.

4. Verfahren nach einem der vorherigen Ansprüche, **dadurch gekennzeichnet, dass** als durchzuführende Funktionen eine oder mehrere der folgenden Funktionen von der Niveauregulierungs-Steuereinrichtung (8) berücksichtigt werden:
Anfahrhilferegelungen, Heben-Vorgänge, Veränderungen der Liftachspositionen, Kneeling-Vorgänge in Bussen.

5. Verfahren nach Anspruch 4, **dadurch gekennzeichnet, dass** in dem Fall, dass Anfahrhilferegelungen durchzuführen sind, ein erhöhter erforderlicher Luftdruckwert angefordert wird.

6. Verfahren nach Anspruch 4 oder Anspruch 5, **dadurch gekennzeichnet, dass** in dem Fall, dass Heben Vorgänge und/oder Liftachsbetätigungen durchzuführen sind, ermittelt wird, welcher Druckluftwert erforderlich ist und in dem Fall, dass der erforderliche Druckluftwert den aktuellen Druckluftwert in den Luftfedern (3, 4, 5, 6) überschreitet, ein Anfragesignal mit dem ermittelten erhöhten Luftdruckwert ausgegeben wird.

7. Verfahren nach einem der Ansprüche 4 bis 6, **dadurch gekennzeichnet, dass** in dem Fall, dass ein automatisches Nachregeln mit Heben-Vorgängen durchzuführen ist, ein erhöhter erforderlicher Luftdruckwert angefordert wird.

## Claims

1. Method for the supply of compressed air in a vehicle, in which at least one levelling control device (8) of a pneumatic levelling system having a plurality of pneumatic springs (3, 4, 5, 6) determines a compressed-air demand and outputs a request signal (S1) to a control device (2) of a compressor (1), and the control device (2), as a function of the request signal (S1), activates the compressor (1) for the output of compressed air, the levelling control device (8) determining a required air-pressure value in dependence on functions to be carried out, and the levelling control device (8) communicating the required air-pressure value in the request signal (S1), the levelling control device (8) using current air-pressure values for the pneumatic springs (3, 4, 5, 6) in order to determine the required air-pressure value, **characterized in that** the levelling control device (8) calculates the required air-pressure value from the currently highest air-pressure value of the pneumatic springs (3, 4, 5, 6) and from an additive allowance value.

2. Method according to Claim 1, **characterized in that** the additive allowance value is a value stipulated for each function to be carried out.

3. Method according to Claim 1, **characterized in that** the additive allowance value is determined by the levelling control device (8) currently in dependence on the function to be carried out.

4. Method according to one of the preceding claims, **characterized in that** the functions to be carried out take into account one or more of the following functions of the levelling control device (8):
starting-aid controls, lifting actions, variations in the lift-axis positions, kneeling actions in buses.

5. Method according to Claim 4, **characterized in that**, in the event that starting-aid controls are to be carried out, an increased required air-pressure value is requested.

6. Method according to Claim 4 or Claim 5, **characterized in that**, in the event that lifting actions and/or lift-axis actuations are to be carried out, it is determined which compressed-air value is required, and, in the event that the required compressed-air value overshoots the current compressed-air value in the pneumatic springs (3, 4, 5, 6), a request signal having the increased air-pressure value determined is output.

7. Method according to one of Claims 4 to 6, **characterized in that**, in the event that automatic readjustment by means of lifting actions is to be carried out, an increased required air-pressure value is requested.

## Revendications

1. Procédé d'alimentation en air comprimé dans un véhicule, selon lequel au moins un dispositif de commande de régulation de niveau (8) d'un système de régulation de niveau pneumatique comprenant plusieurs amortisseurs pneumatiques (3, 4, 5, 6) détermine un besoin en air comprimé et délivre un signal d'interrogation (S1) à un dispositif de commande (2) d'un compresseur (1) et le dispositif de commande (2) commande le compresseur (1) pour qu'il délivre de l'air comprimé en fonction du signal d'interrogation (S1), le dispositif de commande de régulation de niveau (8) déterminant une valeur d'air comprimé nécessaire en fonction des fonctions à exécuter et le dispositif de commande de régulation de niveau (8) communiquant la valeur d'air comprimé nécessaire dans le signal d'interrogation (S1), le dispositif de commande de régulation de niveau (8) utilisant les valeurs d'air comprimé actuelles des amortisseurs pneumatiques (3, 4, 5, 6) pour déterminer la valeur d'air comprimé nécessaire, **caractérisé en ce que** le dispositif de commande de régulation de niveau (8) calcule la valeur d'air comprimé nécessaire à partir de la valeur d'air comprimé actuellement la plus élevée des amortisseurs pneumatiques (3, 4, 5, 6) et d'une valeur de majoration à additionner.

2. Procédé selon la revendication 1, **caractérisé en ce que** la valeur de majoration à additionner est une valeur prédéterminée pour chaque fonction à exécuter.

3. Procédé selon la revendication 1, **caractérisé en ce que** la valeur de majoration à additionner par le dispositif de commande de régulation de niveau (8) est déterminée actuellement d'après la fonction à exécuter.

4. Procédé selon l'une des revendications précédentes, **caractérisé en ce que** les fonctions à exécuter qui sont prises en compte sont une ou plusieurs des fonctions suivantes du dispositif de commande de régulation de niveau (8) : régulateurs d'aide au démarrage, opérations de levage, modifications des positions de l'essieu relevable, opérations de la suspension à genouillère dans les bus.

5. Procédé selon la revendication 4, **caractérisé en ce qu'**une valeur d'air comprimé nécessaire plus élevée est demandée dans le cas où il faut actionner les régulateurs d'aide au démarrage.

6. Procédé selon la revendication 4 ou la revendication 5, **caractérisé en ce que** dans le cas où il faut exécuter des opérations de levage et/ou des actionnements de l'essieu relevable, la valeur d'air comprimé nécessaire est déterminée et dans le cas où la valeur d'air comprimé nécessaire dépasse la valeur d'air comprimé actuelle dans les amortisseurs pneumatiques (3, 4, 5, 6), un signal d'interrogation est délivré avec la valeur d'air comprimé accrue déterminée.

7. Procédé selon l'une des revendications 4 à 6, **caractérisé en ce qu'**une valeur d'air comprimé nécessaire accrue est demandée dans le cas où il faut effectuer un réajustage automatique avec des opérations de levage.
